# EUROPEAN PATENT SPECIFICATION

(11) **EP 1 301 736 B1**
(45) Date of publication and mention of the grant of the patent: **16.03.2005**
(21) Application number: 01952831.4
(22) Date of filing: 18.07.2001
(51) Int. Cl.: F16H 15/42

(54) **BELT DRIVE RING CVT COUPLER**
VERBINDUNGSVORRICHTUNG FÜR STUFENLOSE RIEMENGETRIEBE MIT ANTRIEBSRINGEN
COUPLEUR CVT A COURONNES D'ENTRAINEMENT DE COURROIE

(30) Priority: 21.07.2000 US 220242 P
(43) Date of publication of application: 16.04.2003
(73) Proprietor: THE GATES CORPORATION, Denver, CO 80202 (US)
(72) Inventor: YUAN, Jing, Rochester Hills, MI 48307 (US)
(74) Representative: James, Anthony Christopher W.P.
(86) International application number: PCT/US2001/022560
(87) International publication number: WO 2002/008639

(56) References cited:
- EP-A- 0 870 950
- FR-A- 1 290 987
- GB-A- 705 443
- US-A- 3 572 145
- US-A- 4 875 894
- US-A- 5 709 624

## Description

### Field of the Invention

The invention relates to power transmission systems, and more particularly, to belt drive ring CVT couplers used to transmit power from a driver pulley to a driven pulley.

### Background of the Invention

It is well known in the art that a gear type transmission may be used for running a motor vehicle, motorcycle or the like. For the purposes of improving fuel. efficiency, a continuously variable transmission, CVT, is preferable. Various types of belts have been developed for use in continuously variable transmissions.

Generally, the CVT Belts have a silhouette similar to that of a conventional V-belt. In particular, they are broad at the top and narrow at the bottom and designed to fit between the sheaves of a pulley that define an angular groove. The pulley on which the belt is trained comprises a moveable sheave and a fixed sheave, both having a truncated cone shape. Generally, one of the sheaves moves while the other remains fixed.

Moving one sheave in relation to the other effectively varies the effective diameter, φ, of the pulley within which the belt operates. Consequently, belt speed is a function of the effective diameter of the pulley that is, in turn, a function of the axial position of the sheaves relative to each other. Generally two pulleys, a driver and a driven, are present in a CVT transmission.

Although each of the prior art CVT belts are flexible, each also has characteristics not found in other power transmission belts. For example, the belts are required to have transverse rigidity. This allows the belt to run at a particular effective diameter without being crushed between the pulley sheaves. Consequently, each CVT belt system comprises a belt trained around variable diameter pulleys.

A variation of the flexible belt is the drive ring. The drive ring comprises a tough plastic or metal ring that is trained in a pulley. A flexible belt is then trained about the ring. The axis of rotation of the ring moves eccentrically with respect to the axis of rotation of the pulley as the pulley sheaves move.

US-A-3,572,145, which is regarded to constitute the closest prior art, shows in one of its embodiments a belt drive ring CVT coupler consisting of a frame which has a first and second rotating member mounted on it, which carry a flexible member.

Regarding the prior art relationship between the pulley and the belt, US patent 5,709,624 to Donowski discloses a variable diameter pulley. A single drive ring runs in the sheaves of the pulley. A flexible belt runs on the drive ring through the pulley. As the sheaves move with respect to each other, the effective diameter of the pulley is changed. Since the drive ring bears the transverse or compressive forces between the sheaves, the belt need not be designed to accommodate these forces. However, the Donowski device comprises a single drive ring used as a part of an auxiliary drive system of an internal combustion engine. A stabilizing member is also required to maintain the axis of rotation of the drive ring as least substantially parallel to the axis of rotation of the sheave members. The Donowski device does not lend itself to use in a CVT transmission.

Also representative of the prior art is US patent 4,875,894 to Clark, which discloses a continuously variable transmission. The transmission comprises an input and output shaft, each having a rotary disk assembly. The rotary disk assemblies each have contact pads that form circles having continuously variable diameters. The two rotary disk assemblies are connected by a coupling mechanism, such as a rigid coupling ring. Power transmission occurs between each pulley through rotation of the ring. This device does not offer the option of using flexible belts for power transmission, requiring instead the rigid ring to connect the two disks. This enlarges the space that the device can operate within, generally to a square or circular space defined by the extreme outer dimension of the pulleys.

Drive rings have not been applied to CVT couplers. Generally, flexible CVT belts are adversely affected by heat and friction as they operate. Further, CVT belts are generally more costly than power transmission belts used for vehicle accessory drives. Consequently, when a CVT belt fails, it is necessary to replace it with a like belt instead of a less costly v-belt.

What is needed is a belt drive ring CVT coupler having drive rings. What is needed is a belt drive ring CVT coupler having endless belts trained between the drive rings. What is needed is a belt drive ring CVT coupler having a frame for fixing the drive rings in a predetermined spatial relationship. The present invention meets these needs.

### Summary of the Invention

The primary aspect of the invention is to provide a belt drive ring CVT coupler having drive rings.

Another aspect of the invention is to provide a belt drive ring CVT coupler having endless belts trained between the drive rings.

Another aspect of the invention is to provide a belt drive ring CVT coupler having a frame for fixing the drive rings in a pre-determined spatial relationship.

Other aspects of the invention will be pointed out or made obvious by the following description of the invention and the accompanying drawings.

The invention comprises a belt drive ring CVT coupler as defined in claim 1. A pair of drive rings are rotatably connected to each end of a frame. The frame controls the spatial relationship of the drive rings thereby avoiding relative motion of the rings as the coupler operates, thereby increasing power transmission while reducing frictional heating and thereby increasing life of the coupler. The drive rings comprise metallic or non-metallic materials and exhibit enhanced wear resistance as compared to prior art elastomeric belts, thereby increasing belt life. Belts are trained around the drive rings. The belts may be any available in the art, thereby reducing the cost of the coupler to a user. The frame holds the drive rings in a pre-determined relationship between the pulley sheaves. The drive ring on' the driver pulley turns in the same direction as the driver pulley through frictional contact with the sides of the CVT driver pulley sheaves. The drive ring on the driven pulley side rotates in the same direction to the drive ring on the driver pulley, since they are mechanically connected by the belts. The driven drive ring is then in frictional contact with the sides of the driven pulley sheaves, thereby driving the driven pulley. The frictional wear of the coupler is significantly reduced because the ring contacts the sheave sides instead of the belt. The effective diameter or radius of each pulley is adjusted by movement of the pulley sheaves. Movement of the pulley sheaves causes the axis of rotation of each drive ring to move eccentrically with respect to the axis of rotation of its respective pulley. Since the drive rings are mechanically connected, the drive rings move with the frame as a unit in response to the movement of the pulley sheaves, thereby changing the effective gear ratio of the transmission.

### Brief Description of the Drawings

The accompanying drawings, which are incorporated in and form a part of the specification, illustrate preferred embodiments of the present invention, and together with a description, serve to explain the principles of the invention.
Fig. 1 is a perspective view of the inventive coupler.
Fig. 2 is a cross-sectional view of the invention between two pulleys.
Fig. 3 is a side elevation view of the drive ring coupler.
Fig. 4 is a side elevation view of the drive ring coupler.
Fig. 5 is a perspective view of the bearing frame.
Fig. 6 is a side elevation view of the bearing frame and rings.
Fig. 7 is a side plan view of the bearing frame and rings.
Fig. 8 is a perspective view of the rings and bearings.
Fig. 9 is a perspective view of a ring.
Fig. 10 is a cross-sectional view of the coupler on a set of pulleys.

### Detailed Description of the Preferred Embodiment

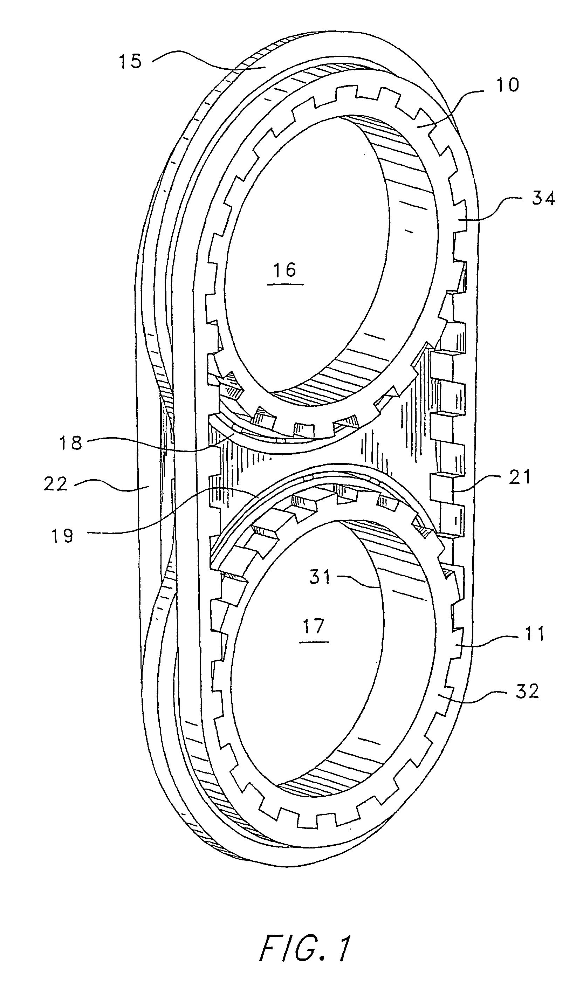

Fig. 1 is a perspective view of the inventive coupler. The belt drive ring CVT coupler comprises drive rings 10, 11. Frame 15 describes a hole 16, 17 at each end of the frame. Bearings 18, 19 are mounted in holes 16, 17 respectively. Rings or ring gears 10, 11 are rotatably mounted to frame 15 in bearings 18, 19. As one skilled in the art can appreciate, frame 15 holds bearings 18, 19 in proper spatial relation, which in turn holds rings 10,11 in proper spatial relation. Rings 10, 11 each have a plane of rotation that is coplanar with each other. Bearings 18, 19 may comprise any suitable bearing type known in the art, including but not limited to ball, needle or sleeve.

Belts 21, 22 are trained over an outer surface of rings 10, 11. Each belt 21, 22 runs side by side from ring 10 to ring 11. The belts are any available in the art. In the preferred embodiment they have a toothed or cog profile. They may also have a multi-ribbed with ribs running longitudinally or a v-belt profile as required by a user. Further, in the preferred embodiment, the belts are shown on either side of the frame 15. In an alternate embodiment, rings 10, 11 are connected to the frame 15 so that a central planar axis of each ring 10, 11 is not aligned with a frame major axis, that is, the rings are offset to one side of the frame centerline. Therefore, the belt or a single belt may run on one side of the frame. Offsetting the rings in the frame in this manner allows a user to accommodate variations in the shape of a CVT transmission case.

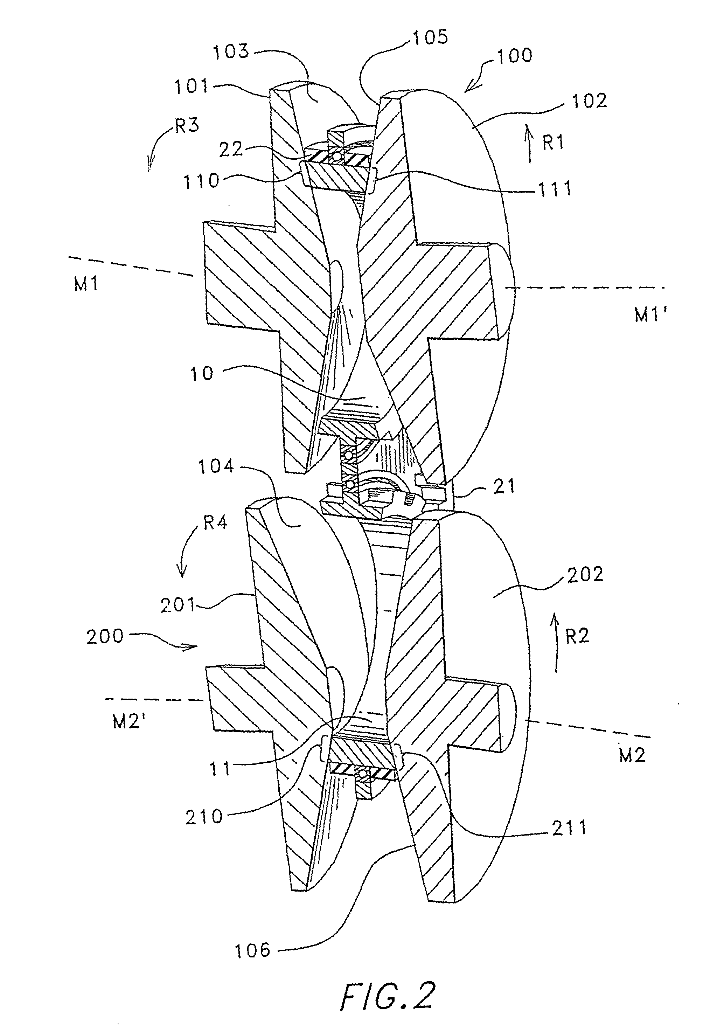

Fig. 2 is a cross-sectional view of the invention between two pulleys. The inventive system is shown installed between a driver pulley 100 and a driven pulley 200. Pulley sheaves 101, 102 move along axis M1, M1', respectively in order to increase or decrease the spacing between the sheaves. Pulley sheaves 201, 202 move along axis M2', M2, respectively in order to increase or decrease the spacing between the sheaves. As shown in Fig. 2, axis M1 and M1' are not parallel. Axis M2, M2' are not parallel. The axis are slightly offset from each other at a predetermined angle. This is because as the pulleys move from the large gap underdrive condition to the small gap overdrive condition, the rings 10, 11 may come into contact with the sheave sides on the side of the sheave opposite that shown in Fig. 2 and as further described herein. Slightly tilting the rotational axis of each sheave compared to its mate as shown in Fig. 2 opens the space between the sheaves on the inboard side between the sheaves. This prevents the ring 10 or 11 from coming into contact with the inboard side of its respective sheave in the overdrive condition. Movement of the CVT pulley sheaves is accomplished by means known in the art.

In operation, pulley 100 rotates in direction R1 and pulley 200 rotates in direction R2. The rotational axis of pulley 100 projects through hole 16. The rotational axis of pulley 200 projects through hole 17. Surfaces 33, 34 of ring 10, see Fig.'s 3, 4, 9, bear on sheave surfaces 103, and 105 at contact area 110, 111 respectively. Surfaces 31, 32 of ring 11, see Fig.'s 3, 4, 9, bear on sheave surfaces 104,106 and contact area 210, 211 respectively.

Such contacts cause ring 10 to rotate in direction R3 in concert with pulley 100. As ring 10 rotates, movement of the belts 21, 22 cause ring 11 to rotate in direction R4, which drives pulley 200 causing it to rotate in direction R2 in concert with and as driven by ring 11. It is known in the art that the effective radius of each ring of the belt drive ring CVT coupler is determined by the relative position of the sheave sections. As the sheave sections of a given pulley move together, the effective radius will increase as the axis of rotation of the ring gear is forced to move toward the axis of rotation of the pulley. Conversely, as the sheave sections move apart, the effective radius will decrease as the rotational axis of the ring gear moves away from the axis of rotation of the pulley.

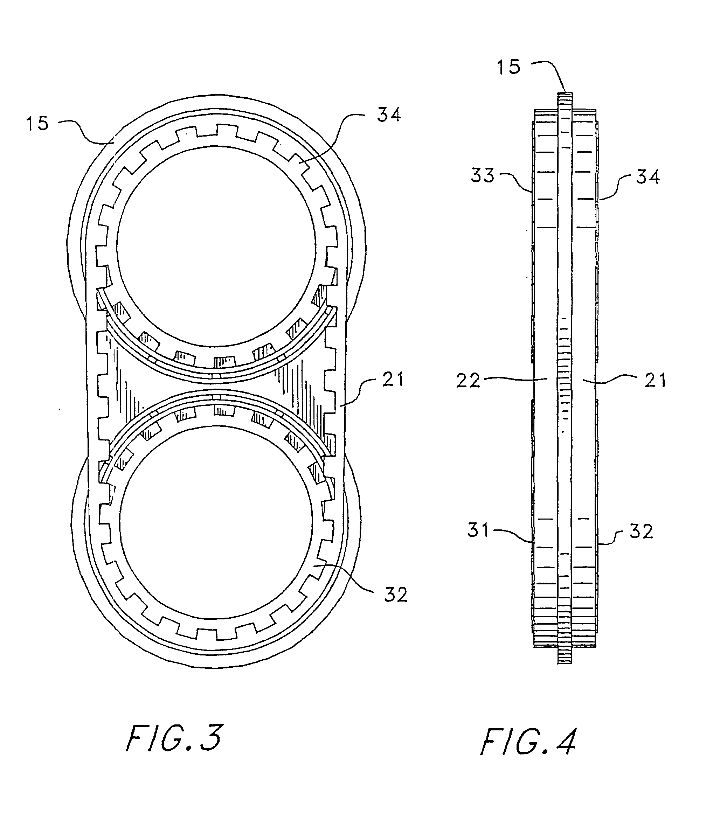

Fig. 3 is a side elevation view of the drive ring coupler. Bearing surface 32 contacts sheave surface 105, see Fig. 2. Bearing surface 34 contacts sheave surface 106.

Fig. 4 is a side elevation view of the drive ring coupler.

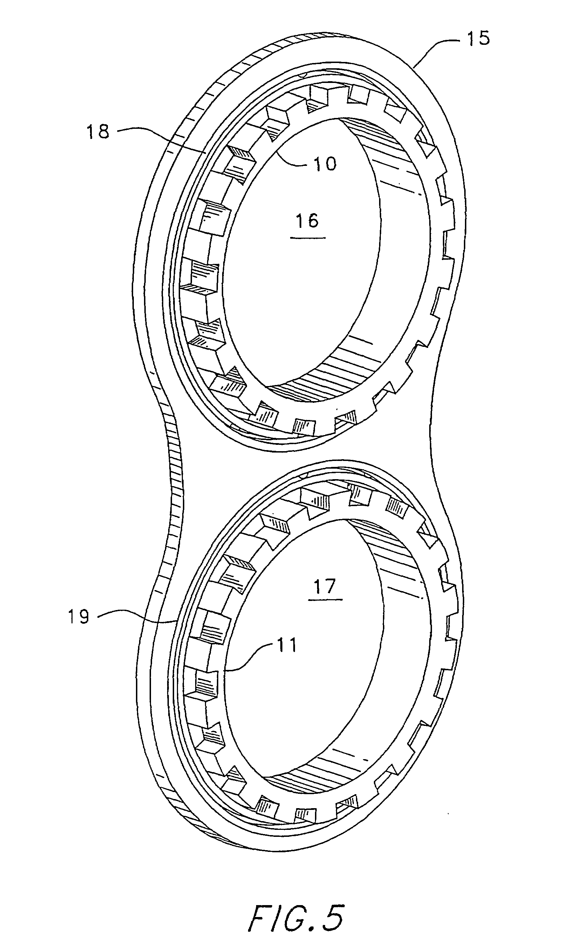

Fig. 5 is a perspective view of the bearing frame. Frame 15 comprises holes 16, 17 at each end of the frame. Bearings 18, 19 are mounted in holes 16, 17 respectively. Rings 10, 11 are press fit into each bearing 18, 19 respectively. Each ring 10, 11 has a profile that cooperates with the profile of the belts (not shown). In this Fig. 5, rings 10, 11 are shown with a toothed profile, although any profile known in the art is acceptable. Bearings 18, 19 mechanically retain and properly locate each ring 10, 11 with respect to the frame 15.

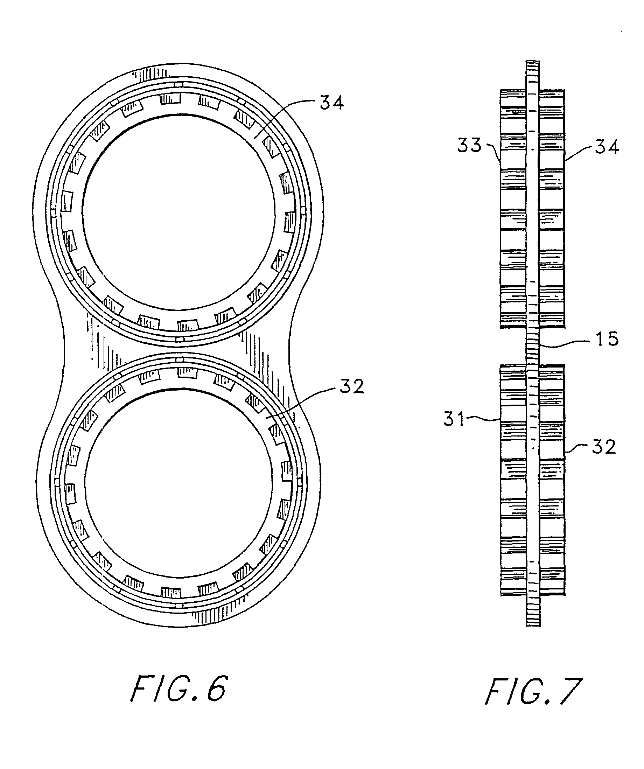

Fig. 6 is a side elevation view of the bearing frame and rings.

Fig. 7 is a side plan view of the bearing frame and rings.

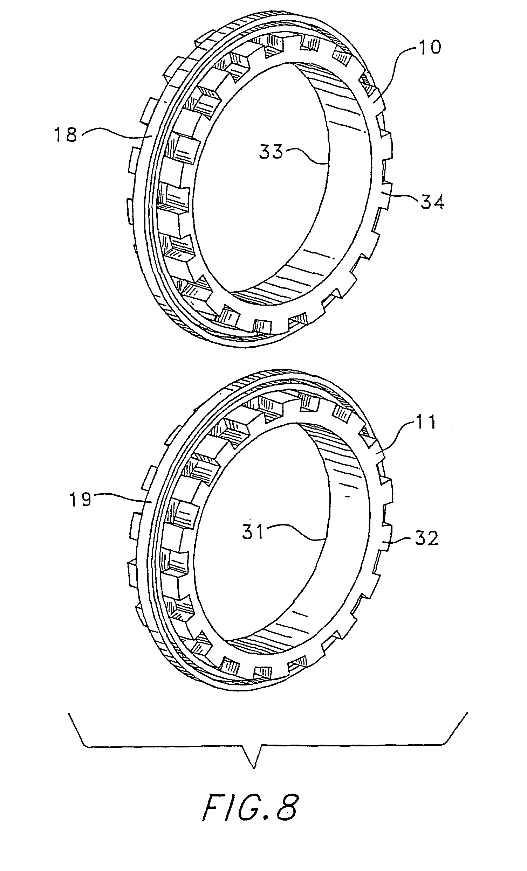

Fig. 8 is a perspective view of the rings and bearings. Neither belts 21, 22 nor frame 15 are shown.

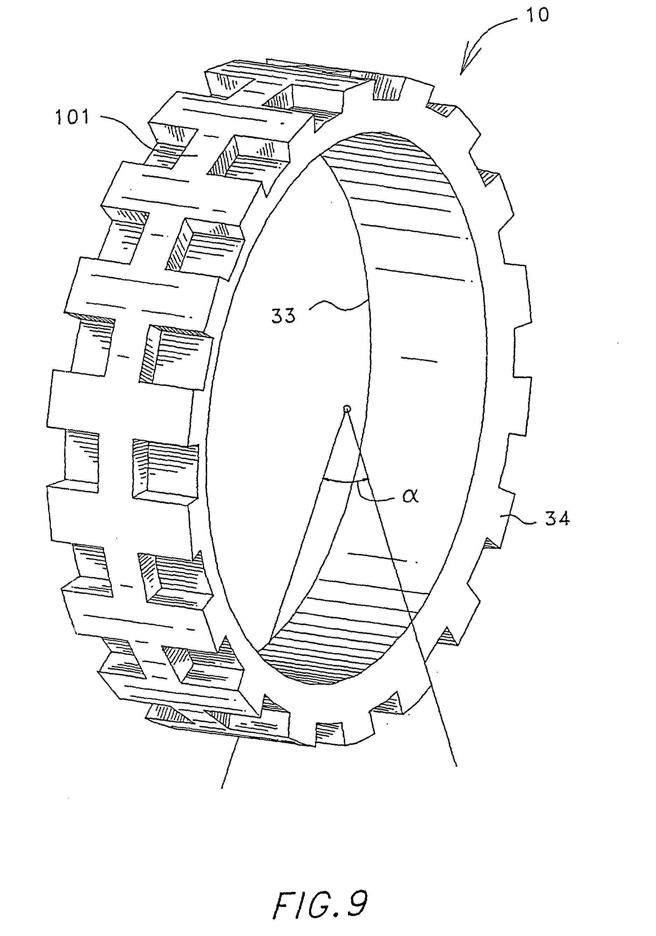

Fig. 9 is a 'perspective view of a ring. Opposing bearing surfaces 33, 34 of ring 10 describe an angle α with respect to each other. The vertex of angle α being substantially aligned with an axis of rotation of ring 10. Opposing bearing surfaces 31, 32 of ring 11 (not shown) also describe an angle α with respect to each other. Angle α substantially equates to ½ the value of the included angle between the inner surfaces of a pulley sheave in which the ring operates. Therefore, α may be specified to accommodate the physical characteristics of a particular pulley. This figure is typical for ring 10 and 11. Of course, one skilled in the art will appreciate that the angle α may be different for each ring depending upon the included angle of the pulley in which the ring operates. Surface 101 encircles ring 10. The bearing as shown in Fig. 8 bears on surface 101. Surfaces 31, 32, 33, 34 comprise a non-metallic frictional material in the preferred embodiment. Of course, surfaces 31, 32, 33, 34 may also comprise a frictional metallic material.

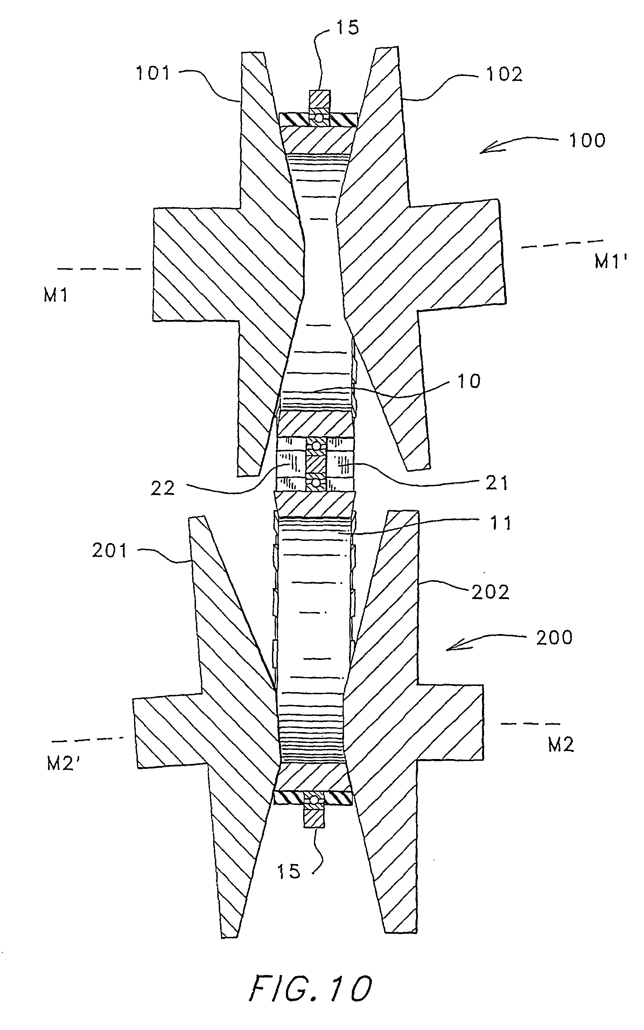

Fig. 10 is a cross-sectional view of the coupler on a set of pulleys. A coupler is shown between pulleys 100 and 200.

Although a single form of the invention has been described herein, it will be obvious to those skilled in the art that variations may be made in the construction and relation of parts without departing from the scope of the invention described herein.

## Claims

1. A belt drive ring CVT coupler comprising:
a frame (15) having two holes (16, 17);
first and second rotating members (10, 11), each rotationally mounted in a hole (16, 17) in the frame (15); and
at least one endless member (21, 22) trained between the first and second rotating members (18, 19) and bearing on an outer surface of the first and second rotating members (10,11 ), wherein both of the rotating members (10, 11) are rings.

2. The coupler as in claim 1, wherein each first and second rotating member (10, 11) has a plane of rotation and the planes of rotation are substantially coplanar.

3. The coupler as in claim 2, wherein the frame (15) describes at least one plane that is substantially coplanar with the plane of rotation of each of the first and second rotating members (10,11).

4. The coupler as in any one of the preceding claims, wherein each rotating member (10, 11) further comprises:
opposing bearing surfaces (31, 32, 33, 34) for cooperatively engaging a pulley (100, 200).

5. The coupler as in claim 4, wherein the opposing bearing surfaces (31, 32; 33, 34) on each rotating member (10, 11) further describe an angle (α).

6. The coupler as in claim 4 or 5, wherein the opposing bearing surfaces (31, 32, 33, 34) comprise a non-metallic material.

7. The coupler as in any one of the preceding claims, wherein each rotating member (10, 11) further comprises:
a surface for cooperatively engaging a belt (21, 22), the surface having a profile.

8. The coupler as in claim 7, wherein the profile comprises a toothed profile.

9. The coupler as in any one of the preceding claims, further comprising:
a bearing (18, 19) for rotationally mounting on each first and second rotating member (10, 11) to the frame (15).

10. The coupler as in any one of the preceding claims, further comprising:
a plurality of endless belt members (21, 22) trained between each first and second rotating member (10, 11) about an outer surface of each first and second rotating member (10,11).

11. The coupler as in any one of the preceding claims, wherein:
the frame resiliently biases apart the first and second rotating members (10, 11), whereby a tension in an endless member (21, 22) is maintained.

## Patentansprüche

1. Verbindungsvorrichtung für stufenlos verstellbare Riementriebe mit Treibringen, mit:
einem Rahmen (15) mit zwei Löchern (16, 17);
einem ersten und einem zweiten Drehteil (10, 11), die jeweils drehbar in einem Loch (16, 17) des Rahmens (15) angebracht sind; und
zumindest einem Endloselement (21, 22), das das erste und das zweite Drehteil (10, 11) antriebsmäßig verbindet und auf der Außenfläche des ersten und des zweiten Drehteils (10, 11) aufliegt, wobei beide Drehteile (10, 11) Ringe sind.

2. Verbindungsvorrichtung nach Anspruch 1, bei der jedes erste und zweite Drehteil (10, 11) eine Drehebene aufweist und die Drehebenen im wesentlichen komplanar sind.

3. Verbindungsvorrichtung nach Anspruch 2, bei der der Rahmen (15) zumindest eine Ebene beschreibt, die im wesentlichen komplanar mit der Drehebene jedes der ersten und der zweiten Drehteile (10, 11) ist.

4. Verbindungsvorrichtung nach einem der vorhergehenden Ansprüche, bei der jedes Drehteil (10. 11) ferner aufweist:
gegenüberliegende Lagerflächen (31, 32, 33, 34) zum zusammenwirkenden Angreifen an einer Riemenscheibe (100, 200).

5. Verbindungsvorrichtung nach Anspruch 4, bei der die gegenüberliegenden Lagerflächen (31, 32, 33, 34) an jedem Drehteil (10, 11) ferner einen Winkel (α) beschreiben.

6. Verbindungsvorrichtung nach Anspruch 4 oder 5, bei der die gegenüberliegenden Lagerflächen (31, 32, 33, 34) ein nicht metallisches Material aufweisen.

7. Verbindungsvorrichtung nach einem der vorhergehenden Ansprüche, bei der jedes Drehteil (10, 11) ferner aufweist:
eine Fläche zum zusammenwirkenden Angreifen an einem Riemen (21, 22), wobei die Fläche ein Profil aufweist.

8. Verbindungsvorrichtung nach Anspruch 7, bei der das Profil ein Verzahnungsprofil umfaßt.

9. Verbindungsvorrichtung nach einem der vorhergehenden Ansprüche, ferner mit:
einem Lager (18, 19) zum drehbaren Anbringen jedes ersten und zweiten Drehteils (10, 11) an dem Rahmen (15).

10. Verbindungsvorrichtung nach einem der vorhergehenden Ansprüche, ferner mit:
mehreren Endlosriemen (21, 22), die antriebsmäßig mit jedem ersten und zweiten Drehteil (10, 11) verbunden sind und um eine Außenfläche jedes ersten und zweiten Drehteils (10, 11) umlaufen.

11. Verbindungsvorrichtung nach einem der vorhergehenden Ansprüche, bei der:
der Rahmen das erste und das zweite Drehteil (10, 11) elastisch voneinander weg vorspannt, wodurch die Spannung in dem Endloselement (21, 22) beibehalten wird.

## Revendications

1. Coupleur CVT à couronnes d'entraînement par courroie, comprenant:
un bâti (15) comportant deux trous (16, 17) ;
des premier et second éléments tournants (10, 11), chacun étant monté mobile en rotation dans un trou (16, 17) réalisé dans le bâti (15) ; et
au moins un élément sans fin (21, 22) entraîné entre les premier et second éléments tournants (18, 19) et portant sur une surface extérieure des premier et second éléments tournants (10, 11), dans lequel les deux éléments tournants (10, 11) sont des couronnes.

2. Coupleur selon la revendication 1, dans lequel chacun des premier et second éléments tournants (10, 11) a un plan de rotation, et les plans de rotation sont sensiblement coplanaires.

3. Coupleur selon la revendication 2, dans lequel le bâti (15) décrit au moins un plan qui est sensiblement coplanaire au plan de rotation de chacun des premier et second éléments tournants (10, 11).

4. Coupleur selon l'une quelconque des revendications précédentes, dans lequel chaque élément tournant (10, 11) comprend en outre :
des surfaces portantes opposées (31, 32 ; 33, 34) servant à engager par coopération une poulie (100, 200).

5. Coupleur selon la revendication 4, dans lequel les surfaces portantes opposées (31, 32 ; 33, 34) de chaque élément tournant (10, 11) décrivent en outre un angle (α).

6. Coupleur selon la revendication 4 ou 5, dans lequel les surfaces portantes opposées (31, 32 ; 33, 34) comprennent un matériau non métallique.

7. Coupleur selon l'une quelconque des revendications précédentes, dans lequel chaque élément tournant (10, 11) comprend en outre:
une surface servant à engager par coopération une courroie (21, 22), la surface ayant un certain profil.

8. Coupleur selon la revendication 7, dans lequel le profil comprend un profil denté.

9. Coupleur selon l'une quelconque des revendications précédentes, comprenant en outre:
un palier (18, 19) servant au montage rotatif de chacun des premier et second éléments tournants (10, 11) sur le bâti (15).

10. Coupleur selon l'une quelconque des revendications précédentes, comprenant en outre:
une pluralité d'éléments (21, 22) de courroie sans fin entraînés entre des premier et second éléments tournants (10, 11) autour d'une surface extérieure de chacun de premier et second éléments tournants (10, 11).

11. Coupleur selon l'une quelconque des revendications précédentes, dans lequel :
le bâti sollicite élastiquement les premier et second éléments tournants (10, 11) en les écartant l'un de l'autre, ce par quoi une tension est maintenue dans un élément sans fin (21, 22).
